# EUROPÄISCHE PATENTSCHRIFT

(11) **EP 0 739 316 B1**
(45) Veröffentlichungstag und Bekanntmachung des Hinweises auf die Patenterteilung: **01.10.1997**
(21) Anmeldenummer: 95905048.5
(22) Anmeldetag: 05.01.1995
(51) Int. Cl.: C03B 23/09

(54) **VORRICHTUNG ZUM VERFORMEN VON GLASROHREN**
DEVICE FOR SHAPING GLASS TUBES
DISPOSITIF POUR LE FORMAGE DE TUBES EN VERRE

(30) Priorität: 05.01.1994 DE 4400407
(43) Veröffentlichungstag der Anmeldung: 30.10.1996
(73) Patentinhaber: Dichter, Hans-Joachim, D-10829 Berlin (DE)
(72) Erfinder: Dichter, Hans-Joachim, D-10829 Berlin (DE)
(74) Vertreter: Böning, Manfred, Dr.-Ing.
(86) Internationale Anmeldenummer: DE9500030
(87) Internationale Veröffentlichungsnummer: WO9518770

(56) Entgegenhaltungen:
- WO-A-87/06223
- CH-A- 495 920
- DE-B- 1 224 451
- US-A- 3 171 730

## Beschreibung

Die Erfindung betrifft eine Vorrichtung zum Verformen von Glasrohren mit zwei in eine Drehbewegung versetzbaren Formwerkzeugen, die in entgegengesetzter Richtung gegen den Umfang des erweichten Glasrohres drückbar sind, um eine ihrem Profil entsprechende Einschnürung des Glasrohres zu erzeugen.

Vorrichtungen der vorstehenden Art werden in Glasbearbeitungsmaschinen zur Herstellung von Fläschchen aus Glasrohren verwendet, um die Hälse der Fläschchen zu formen. Bei einer aus der DE 17 96 100 B2 bekannten einschlägigen Vorrichtung werden paarweise angeordnete Formrollen von Auslegerarmen gehalten, die in entgegengesetzter Richtung hin- und herbewegbar sind und die beim Formgebungsprozeß dergestalt zur Längsachse des Glasrohres hinbewegt werden, daß dies zangenartig von den Formrollen erfaßt wird. Bei der Formgebung kommt es im wesentlichen zu einer Linienberührung zwischen den Formrollen und dem durch Wärmeeinwirkung erweichten Glasrohr. Wie die Erfahrung gezeigt hat, können Unregelmäßigkeiten des Glasrohres, insbesondere Schwankungen seiner Wandstärke, dazu führen, daß die Istform des Fläschchenhalses stärker als zulässig von der Sollform abweicht.

Der Erfindung liegt die Aufgabe zugrunde, eine Möglichkeit zur Verbesserung der Formgebungsgenauigkeit einschlägiger Vorrichtungen aufzuzeigen. Gelöst wird die gestellte Aufgabe erfindungsgemäß dadurch, daß bei einer derartigen Vorrichtung eines der beiden Formwerkzeuge als das Glasrohr und das von einer Rolle gebildete andere Formwerkzeug umschließender Ring ausgebildet ist.

Die erfindungsgemäße Vorrichtung bietet den Vorteil, daß sie auf Abweichungen der Sollmaße von Glasrohren weniger empfindlich reagiert als bekannte Vorrichtungen. Ursächlich für die verbesserte Arbeitsweise dürfte der gegenüber einer Linienberührung vergrößerte Kontaktbereich zwischen dem als Ring ausgebildeten äußeren Formwerkzeug und dem erweichten Glasrohr sowie die Winkelreduzierung im Bereich des keilförmigen Spaltes zwischen der Innenfläche der äußeren Formwerkzeuge und der Außenfläche des Glasrohres sein.

Weitere Einzelheiten und Merkmale der Erfindung ergeben sich aus den Unteransprüchen und der nachstehenden Beschreibung der beigefügten Zeichnung. Es zeigen:

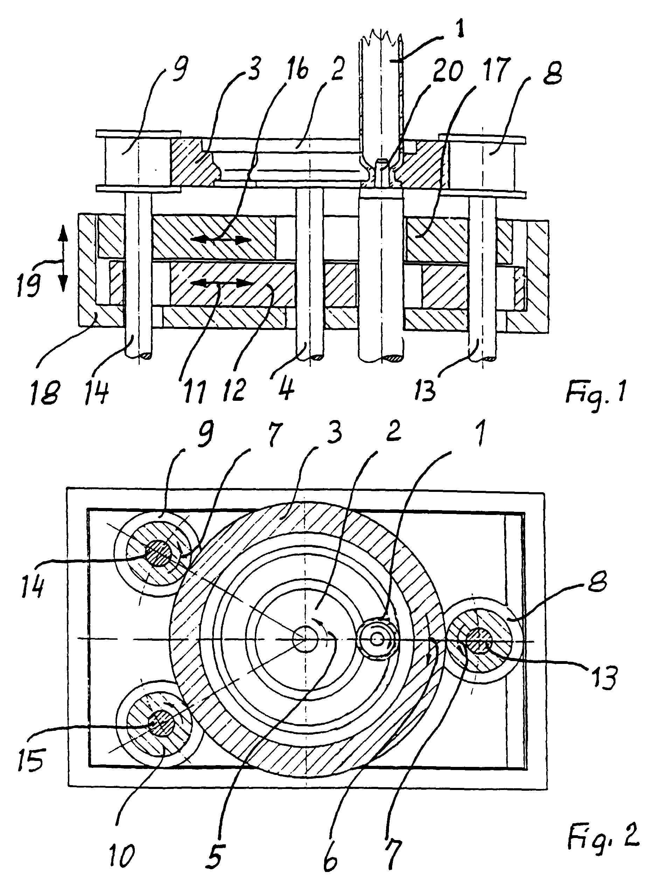

Fig. 1 teilweise im Schnitt die schematisierte Seitenansicht einer Vorrichtung und
Fig. 2 ebenfalls teilweise im Schnitt die Draufsicht auf die Vorrichtung gemäß Fig. 1.

In den Figuren ist 1 ein Glasrohr, aus dem auf einer bekannten Glasbearbeitungsmaschine Glasfläschchen hergestellt werden. Die Figuren zeigen die Position der zur Herstellung des Halses des Glasrohres 1 verwendeten Formwerkzeuge am Ende des Formgebungsvorganges. Die Formwerkzeuge werden von einer Rolle 2 und einem die Rolle 2 umschließenden Ring 3 gebildet. In die Rolle 2 wird über eine Welle 4 von einem ersten nicht dargestellten Elektromotor eine Drehbewegung in Richtung des Pfeiles 5 eingeleitet, während zum Antrieb des Ringes 3 in Richtung des Pfeiles 6 drei gleichsinnig in Richtung der Pfeile 7 rotierende Antriebsrollen 8,9 und 10 dienen, die den Ring 3 halten und gemeinsam von einem weiteren nicht dargestellten Elektromotor angetrieben werden, wobei beide zum Antrieb der Rolle 2 und des Ringes 3 verwendeten Motore hinsichtlich ihrer Drehzahl so gesteuert werden, daß es zwischen den Formwerkzeugen und dem Glasrohr 1 zu einer Abrollbewegung kommt.

Die Welle 4 der Rolle 2 ist in einem in Richtung des Doppelpfeiles 11 hin- und herbewegbaren Schlitten 12 gelagert, während die Wellen 13,14 und 15 der Antriebsrollen 8,9,10 und des von diesen gehaltenen Ringes 3 in Richtung des Doppelpfeiles 16 jeweils gegenläufig zu den Bewegungen des Schlittens 12 in einem Schlitten 17 gelagert sind. Beide Schlitten 12 und 17 lassen sich zusätzlich mittels eines Hubschlittens 18 in Richtung des Doppelpfeiles 19 auf-und abbewegen. Der Antrieb der Schlitten 12,17 und 18 erfolgt mit an sich bekannten Mitteln, auf deren Darstellung und Beschreibung folglich verzichtet werden kann.

Während des Formgebungsvorganges taucht ein Dorn 20 in das untere offene Ende des Glasrohres 1 ein, wie dies ebenfalls allgemein üblich und bekannt ist.

## Patentansprüche

1. Vorrichtung zum Verformen von Glasrohren mit zwei in eine Drehbewegung versetzbaren Formwerkzeugen, die in entgegengesetzter Richtung gegen den Umfang des erweichten Glasrohres drückbar sind, um eine ihrem Profil entsprechende Einschnürung des Glasrohres zu erzeugen, **dadurch gekennzeichnet**, daß eines der beiden Formwerkzeuge als das Glasrohr (1) und das von einer Rolle (2) gebildete andere Formwerkzeug umschließender Ring (3) ausgebildet ist.

2. Vorrichtung nach Anspruch 1, **dadurch gekennzeichnet**, daß das von einem Ring (3) gebildete Formwerkzeug durch mindestens drei über den Ringumfang verteilte Antriebsrollen (8,9,10) gehalten wird.

3. Vorrichtung nach Anspruch 1 oder 2, **dadurch gekennzeichnet**, daß die Wellen (13,14,15) der Antriebsrollen (7,8,9) für das als Ring (3) ausgebildete Formwerkzeug in einem Schlitten (17) gelagert sind, der senkrecht zur Längsachse des Glasrohres (1) gerichtete Hin- und Herbewegungen ausführen kann.

4. Vorrichtung nach einem oder mehreren der Ansprüche 1 bis 3, **dadurch gekennzeichnet**, daß die Welle (4) des als Rolle (2) ausgebildeten Formwerkzeuges in einem Schlitten (12) gelagert ist, der senkrecht zur Längsachse des Glasrohres (1) gerichtete Hin- und Herbewegungen ausführen kann.

5. Vorrichtung nach Anspruch 3 und 4, **dadurch gekennzeichnet**, daß die beiden Schlitten (12,17) gegenläufige Bewegungen durchführen können.

6. Vorrichtung nach einem oder mehreren der Ansprüche 1 bis 5, **dadurch gekennzeichnet**, daß die Formwerkzeuge (2,3) durch einen Hubschlitten (18) auf-und abbewegbar sind.

7. Vorrichtung nach einem oder mehreren der Ansprüche 1 bis 6, **dadurch gekennzeichnet**, daß in die Öffnung des Glasrohres (1) ein Dorn (20) einführbar ist.

## Claims

1. A device for the shaping of glass tubes, with two shaping tools which can be set in rotational movement and which can be pressed in opposite directions against the circumference of the softened glass tube, in order to produce a contraction of the glass tube, said contraction corresponding to their profile, wherein one of the two shaping tools is designed as a ring (3) which surrounds the glass tube (1) and the other shaping tool formed by a roller (2).

2. The device as claimed in claim 1, wherein the shaping tool formed by a ring (3) is held by at least three drive rollers (8, 9, 10) distributed over the ring circumference.

3. The device as claimed in claim 1 or 2, wherein the shafts (13, 14, 15) of the drive rollers (7, 8, 9) for the shaping tool designed as a ring (3) are mounted in a slide (17) which can execute to-and-fro movements directed perpendicularly to the longitudinal axis of the glass tube (1).

4. The device as claimed in one or more of claims 1 to 3, wherein the shaft (4) of the shaping tool designed as a roller (2) is mounted in a slide (12) which can execute to-and-fro movements directed perpendicularly to the longitudinal axis of the glass tube (1).

5. The device as claimed in claim 3 or 4, wherein the two slides (12, 17) can execute movements in opposition.

6. The device as claimed in one or more of claims 1 to 5, wherein the shaping tools (2, 3) can be moved up and down by means of a lifting slide (18).

7. The device as claimed in one or more of claims 1 to 6, wherein a mandrel (20) can be introduced into the orifice of the glass tube (1).

## Revendications

1. Dispositif pour le formage de tubes en verre, comprenant deux outils de formage pouvant être mis en mouvement de rotation, qui peuvent être pressés dans des sens opposés contre la périphérie du tube en verre ramolli, pour produire un rétrécissement du tube de verre correspondant à leur profil, caractérisé en ce que l'un des deux outils est constitué par un anneau (3) qui entoure le tube de verre (1) et l'autre outil de formage constitué par une molette (2).

2. Dispositif selon la revendication 1, caractérisé en ce que l'outil de formage constitué par un anneau (3) est tenu par au moins trois molettes d'entraînement (8, 9, 10) réparties sur la circonférence de l'anneau.

3. Dispositif selon la revendication 1 ou 2, caractérisé en ce que les arbres (13, 14, 15) des molettes d'entraînement (7, 8, 9) entraînant l'outil de formage constitué par un anneau (3) sont tourillonnés dans un chariot (17) qui peut décrire des mouvements de va-et-vient orientés perpendiculairement à l'axe longitudinal du tube de verre (1).

4. Dispositif selon une ou plusieurs des revendications 1 à 3, caractérisé en ce que l'arbre (4) de l'outil de formage constitué par une molette (2) tourillonne dans un chariot (12) qui peut décrire des mouvements de va-et-vient orientés perpendiculairement à l'axe longitudinal du tube de verre (1).

5. Dispositif selon les revendications 3 et 4, caractérisé en ce que les deux chariots (12, 17) peuvent décrire des mouvements opposés l'un à l'autre.

6. Dispositif selon une ou plusieurs des revendications 1 à 5, caractérisé en ce que les outils de formage (2, 3) peuvent être élevés et abaissés par un chariot élévateur (18).

7. Dispositif selon une ou plusieurs des revendications 1 à 6, caractérisé en ce qu'un mandrin (20) peut être enfoncé dans l'ouverture du tube de verre (1).
